**Europäisches Patentamt**

**European Patent Office**

**Office européen des brevets**

(19)

(11) Veröffentlichungsnummer : **0 209 737**
**B1**

(12)

# EUROPÄISCHE PATENTSCHRIFT

(45) Veröffentlichungstag der Patentschrift :
11.10.89

(51) Int. Cl.⁴ : **B 60 T   8/36**

(21) Anmeldenummer : 86108455.6

(22) Anmeldetag : 20.06.86

(54) Druckmodulator für ABS-Systeme.

(30) Priorität : 23.07.85 DE 3526189

(43) Veröffentlichungstag der Anmeldung :
28.01.87 Patentblatt 87/05

(45) Bekanntmachung dès Hinweises auf die Patenterteilung : 11.10.89 Patentblatt 89/41

(84) Benannte Vertragsstaaten :
AT DE FR GB IT

(56) Entgegenhaltungen :
DE—A— 2 640 874
DE—A— 2 730 168
FR—A— 2 412 443
US—A— 4 113 323
US—A— 4 257 497

(73) Patentinhaber : ROBERT BOSCH GMBH
Postfach 50
D-7000 Stuttgart 1 (DE)

(72) Erfinder : Heess, Gerhard, Dr. Dipl.-Ing.
Stuttgarter Strasse 90
D-7146 Tamm (DE)
Erfinder : Karnopp, Dean, Prof.
1217 Stanford Place
Davis, CA 95616 (US)
Erfinder : van Zanten, Anton, Dr. Dipl.-Ing.
Waldstrasse 15/2
D-7257 Ditzingen 1 (DE)

## Beschreibung

### Stand der Technik

Die Erfindung geht aus von einem Druckmodulator für ABS-Systeme (automatische Blockierschutz-Systeme) nach der Gattung des Hauptanspruchs.

Durch die DE-A-2 854 574 ist ein ABS-System nach der Gattung des Hauptanspruchs bekannt, mittels dem beim durch Bremsen nachteilig anwachsenden Radschlupf, der schließlich zum Blockieren des Rades führen könnte, in wenigstens einem Radbremszylinder dieses Rades eine zumindest teilweise Entlastung des Bremsdrucks durchgeführt wird durch Verschieben des Kolbens des Druckmodulators. Bei zu sehr anwachsendem Schlupf würden Seitenführungskräfte des Rades in nachteiliger Weise kleiner werden oder gar ganz verschwinden. Nachteiliger Radschlupf kann aber auch auftreten an einem Antriebsrad, wenn dieses zu kräftig angetrieben wird, so daß es wünschenswert ist, in eine Fahrzeugbremsanlage zusätzlich zu einem ABS-System auch ein ASR-System (Antriebsschlupfregelungs-System) einzubauen. Beim Rückgriff auf ein ASR-System aus dem Stand der Technik würde die Fahrzeugbremsanlage wesentlich komplizierter, schwerer und teurer. Eine solche Fahrzeugbremsanlage wäre in Werkstätten schwierig zu entlüften. Es stellte sich deshalb die Aufgabe, ein ABS-System mit wenig technischem Aufwand so umzugestalten, daß zusätzlich ASR-Betrieb realisierbar ist. Dabei sollen trotz ASR-Eigenschaft Bremskreise der Fahrzeugbremsanlage auch im ASR-Betrieb vollkommen geschlossen bleiben. Es sollen deshalb keine Magnetventilanordnungen beispielsweise gemäß der DE-A1-31 30 517 vorhanden sein, mittels denen zum Absenken von Bremsdrücken die jeweilige Radbremsleitung zu einem drucklosen Reservoir geöffnet wird. Ein fehlerhaftes Öffnen der Bremskreise kann gefährlich sein.

### Vorteile der Erfindung

Die Erfindung löst die Aufgabe mit den kennzeichnenden Merkmalen des Hauptanspruchs und hat den Vorteil, daß der jeweilige Bremskreis trotz der wirkungsvollen Realisierung von ABS-Funktionen, aber auch ASR-Funktionen, die durch die Bauart des erfindungsgemäßen Druckmodulators gleichermaßen möglich sind, vollkommen geschlossen bleibt und Druckmittel weder abgelassen noch die zur Verfügung stehende Druckmittelmenge durch eine Volumenentnahme reduziert wird. Daher besteht auch keine Notwendigkeit, durch eine gesonderte Pumpe verloren gegangenes Druckmittel wieder ersetzen zu müssen. Gleichzeitig ergibt der erfindungsgemäße Druckmodulator eine Gewichts- und eine Preisersparnis ; und Entlüften des Druckmodulators ist in einfacher Weise möglich.

Die kennzeichnenden Merkmale des Anspruchs 2 ergeben den Vorteil, daß unter Verwendung lediglich einer in zwei Richtungen mit Strom beaufschlagbaren Wicklung wenig Bedarf an Bauraum benötigt und Gewicht eingespart wird. Infolge der kleineren Baugröße sind magnetisch zu durchflutende Strecken kürzer, wodurch auch Energie gespart wird. Dies ist besonders vorteilhaft deshalb, weil das Erzeugen von elektrischer Energie in Kraftfahrzeugen relativ teuer ist.

Die kennzeichnenden Merkmale des Anspruchs 3 geben eine vorteilhafte Ventilanordnung an, die sowohl für ABS- als auch ASR-Betrieb geeignet und an einer günstigen Stelle des Druckmodulators eingebaut ist.

Die kennzeichnenden Merkmale des Anspruchs 4 haben den Vorteil, daß in der Mittelstellung des Doppelrückschlagventils dieses durchströmbar ist zum Zwecke der Nachfüllung von Radbremszylindern und deren Entlüftung.

Die kennzeichnenden Merkmale des Anspruchs 5 geben einen vorteilhaften inneren Aufbau des Druckmodulators an.

Die kennzeichnenden Merkmale des Anspruchs 6 dienen ebenfalls zur Entlüftung des Bremssystems mit dem Vorteil, daß der Kolben eine Stellung einnimmt, in der Strömungsquerschnitte zur besonders schnellen Entlüftung zur Verfügung stehen.

Die kennzeichnenden Merkmale der Ansprüche 7, 8 und 9 haben den Vorteil, daß ohne Beeinträchtigung seiner wesentlichen Funktionen eine direkte Integration des Druckmodulators in den Bremssattel oder die Bremszange einer Radbremszylinderanordnung möglich ist, wodurch eine Minimierung zusätzlicher Bremsflüssigkeits-Volumina im Druckmodulator mit unmittelbarer schneller Reaktion der Bremsen erzielt werden kann, da sich die Steifigkeit des Systems mit Bezug auf Volumenänderung erheblich erhöht. Ferner · wird hierdurch die erforderliche Modulationsenergie so entscheidend vermindert, daß die Dezentralisierung des gesamten Bereichs der Durchführung von ABS-Funktionen bzw. ASR-Funktionen in den Radbremszylinderbereich möglich ist, bei Wegfall eines bisher erforderlichen, zum Teil erheblichen Bau- und Komponentenaufwands und einer hierdurch möglichen, entscheidenden Kostenreduzierung.

Ein ähnlicher Druckmodulator ist in der zeitranggleichen europäischen Patentanmeldung 86 108 454.9 beschrieben.

### Zeichnung

Ein Ausführungsbeispiel der Erfindung ist in der Zeichnung dargestellt und wird in der nachfolgenden Beschreibung näher erläutert. Es zeigen

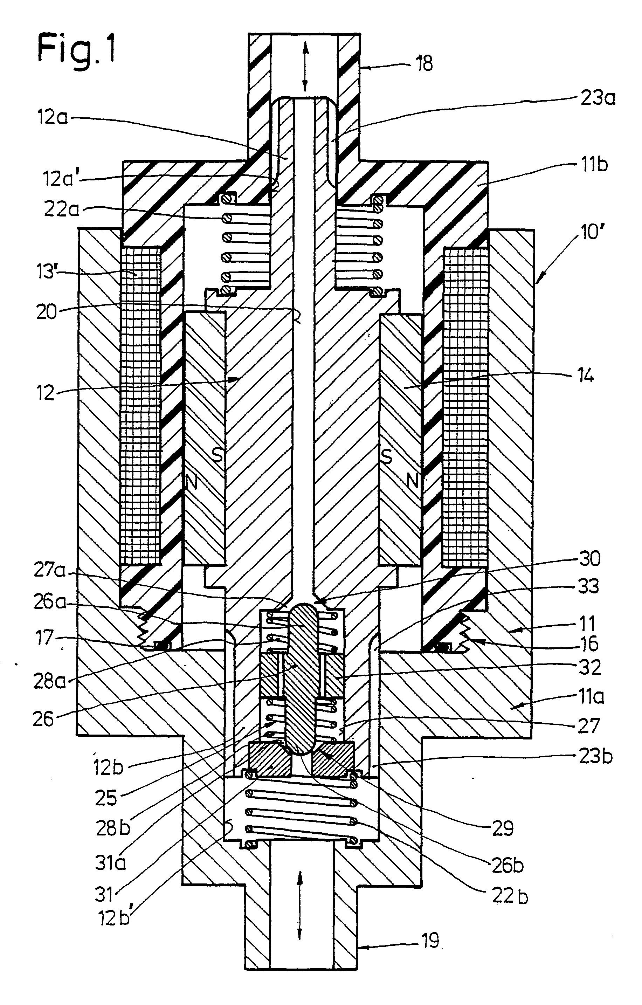

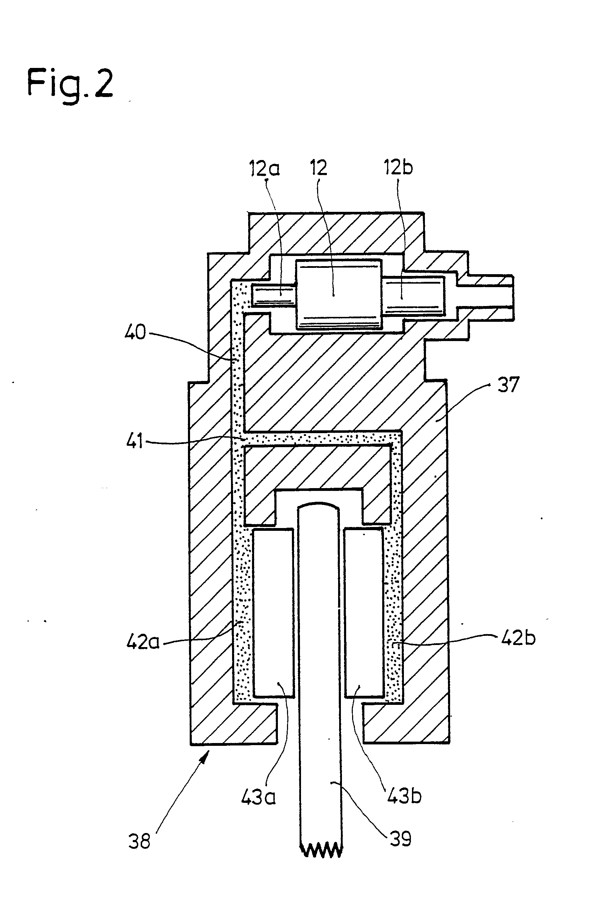

Fig. 1 einen Druckmodulator zur ergänzenden Realisierung von ASR-Funktionen und Fig. 2 eine mögliche Ausführungsform der unmittelbaren Einbeziehung des erfindungsgemäßen Druckmodulators in den Baubereich eines Bremssattels.

## Beschreibung des Ausführungsbeispiels

Der in der Fig. 1 dargestellte Druckmodulator ist so ausgebildet, daß bei Einschaltung in die hydraulische Bremsdruckleitung zu einem Radbremszylinder von ihm eine Druckdifferenz erzeugt werden kann zwischen dem Druck, den der Benutzer des Fahrzeugs beispielsweise bei einer Notbremsung erzeugt und dem tatsächlich erforderlichen und notwendigen Bremsdruck, der auf das Rad ausgeübt wird, damit dieses gerade nicht blockiert. Diese gewünschte Druckdifferenz, deren Verlauf grundsätzlich beliebig sein kann und üblichen ABS-Funktionsverläufen entsprechen kann, wird von einem Druckmodulator in Form eines, vereinfacht ausgedrückt, Kolbenzylinderaggregats erzeugt, welches die Eigenschaften eines sogenannten linearen Aktuators beinhaltet. Der Druckmodulator 10' umfaßt ein äußeres zylindrisches Gehäuse 11, welches seinerseits wieder aus zwei topfförmigen, miteinander verbundenen Teilen, nämlich einem äußeren Teil 11a und einem inneren Teil 11b besteht, sowie einen in diesem, eine innere zylindrische Gleitfläche bildenden Gehäuse unter der Wirkung einer zugeführten elektrischen Hilfsenergie verschiebbaren Anker oder Kolben 12.

Die Eigenschaften dieses Linearaktuators ergeben sich durch die Anordnung einerseits einer eine bestimmte Magnetkraft erzeugenden Wicklung 13', die elektromagnetisch auf die Anwesenheit von Permanentmagneten 14 reagiert und diese entsprechend dem von ihr erzeugten Magnetfluß verschiebt ; grundsätzlich ist es beliebig, ob die Wicklung dem Gehäuse und der Permanentmagnet dem Anker oder umgekehrt zugeordnet wird. Bei dem dargestellten Ausführungsbeispiel ist die Wicklung 13' in einer länglichen Ringausnehmung 15 im inneren Gehäuseteil 11b angeordnet und dieses dann in das aufnehmende äußere Gehäuseteil 11a eingesetzt, vorzugsweise, wie bei 16 angedeutet, mit diesem verschraubt. Zur Abdichtung ist noch ein O-Ring oder eine sonstige geeignete Dichtung 17 vorgesehen. Ein in der Zeichnung oberer Anschlußstutzen 18 wird dabei vom inneren Gehäuseteil 11b gebildet und mit der vom Hauptbremszylinder kommenden Bremsdruckleitung verbunden, während ein unterer Anschlußstutzen 19 vom äußeren Gehäuseteil 11a gebildet ist und vorteilhafterweise auf möglichst kurzem Weg mit der zum jeweiligen Radbremszylinder führenden Bremsdruckleitung verbunden ist.

Der Anker oder Kolben 12 bildet in diesem Druckmodulator-Aggregat seiner Funktion nach einen Pumpenkolben ; zu diesem Zweck wird die Weicheisen-Materialwirkung des Kolbens 12 noch verstärkt durch an ihm angeordnete Permanentmagnete 14, die einen zylinderförmigen Permanent-Ringmagneten bilden können oder auch aus einzelnen Segmenten einfacher Form bestehen können, die in geeigneter Weise mit dem Kolben oder Anker verbunden werden, beispielsweise durch Verklebung etwa mit einem Epoxidharz o. dgl. Es empfiehlt sich, den oder die Magnet(e) mit hoher Koerzitivkraft auszuwählen, beispielsweise aus einem Material wie Samariumkobald oder Neodym, wobei zur Erhöhung der die Verschiebung des Pumpenkolbens bewirkenden magnetischen Kräfte auch das äußere Gehäuse 11a aus Weicheisen, das innere Gehäuse 11b dann bevorzugt aus einem nichtmagnetischen Material besteht.

Der Aufbau des in der Zeichnung dargestellten Druckmodulators vervollständigt sich dann noch durch einen beispielsweise zentralen Durchlaß 20 durch den Kolben 12, in den an geeigneter Stelle, beispielsweise wie in der Zeichnung gezeigt weiter unten, noch ein Rückschlagventil 25 in seiner Ausbildung als federvorgespanntes Ventil angeordnet ist, welches bei vom Hauptbremszylinder über den Durchlaß 20 kommender Druckwirkung dann schließt, wenn der Druck auf der anderen Seite geringer ist. Gehalten und in etwa mittenzentriert in einer gewünschten Grundposition wird der Kolben 12 durch zwei beidseitig angeordnete Vorspannungsfedern 22a ; 22b. An beiden Endseiten des Kolbens 12 bildet dieser im Durchmesser abgesetzte Gleitführungsteile, die im folgenden als Führungskolben 12a, 12b bezeichnet sind und die in entsprechend im Durchmesser verkleinerten (zylindrischen) Gleitführung 12a', 12b' des inneren und äußeren Gehäuses 11b und 11a gehalten und gleitverschieblich gelagert sind. Schließlich sind dort, wo die im Durchmesser verjüngten Führungskolben 12a, 12b des Kolbens 12 in die entsprechenden verjüngten zylinderschen Führungen des inneren und des äußeren Gehäuses 11b und 11a übergehen, noch bypaßähnliche Druckmittel-Durchlaßschlitze 23a, 23b jeweils bis zu einer vorgegebenen Höhe angeordnet, die eine Entlüftung der sich im Bereich der Radbremszylinder befindlichen Bremsenteile ermöglichen. Hierzu gehört auch die Anordnung des Kolbens 12 bzw. des Ringmagnets 14 oder der jeweiligen Magnetsegmente in der Weise, daß ein Fluß des Druckfluids längs der Flächen zwischen Magnet 14 und zentraler Bohrung 24 des inneren Gehäuseteils 11b möglich ist, so daß auf genaue Toleranzen in diesem Bereich nicht geachtet zu werden braucht. Das Zentralteil 12, 24 bildet den linearen Aktuator.

Die Grundfunktion bei normalen Bremsen ist dann so, daß durch den vom Hauptbremszylinder kommenden Druck der Kolben 12 in der Zeichnung nach unten verschoben wird, wodurch sich ein entsprechender Radbremszylinderdruck aufbaut, mit der Möglichkeit des Druckausgleichs über das Rückschlagventil 25, so daß der vom Hauptbremszylinder kommende Druck stets gleich ist dem am jeweiligen Radbremszylinder anliegenden Bremsdruck.

Ergeben sich ABS-Funktionen, dann kann der tatsächlich an dem Radbremszylinder anstehende Bremsdruck durch den erfindungsgemäßen Druckmodulator kontinuierlich gesteuert werden, je nach gewünschtem Druckfunktionsverlauf, wobei der grundsätzliche Funktionsablauf so ist, daß bei Erregung der Spule — zum Einsteuern des variablen Betätigungsstroms wird bevorzugt eine Halbleiter-Leistungselektronik verwendet — der Kolben 12 nach oben gegen den vom Hauptbremszylinder kommenden Bremsdruck drückt, und es wird bei gleichzeitiger Schließung des Rückschlagventils 25 zusätzliches Volumen für das Druckfluid auf der Radbremsseite zur Verfügung gestellt mit der entsprechenden Druckabsenkung, wobei je nach Sensorinformationen im sofortigen Übergang auch wieder umgesteuert werden kann mit entsprechender Druckerhöhung oder eine bestimmte Druckhalteposition kontinuierlich eingefahren und aufrechterhalten wird. Das Modulationsvolumen wird dabei wie ersichtlich, vom oberen, also hauptbremszylinderseitigen Führungskolben 12a zum Hauptbremszylinder erzeugt. Daher liegt auch die Möglichkeit einer insofern neuen Druckmodulation bei ABS-Funktionen innerhalb des erfindungsgemäßen Rahmens, da nicht mehr schlagartig zwischen vollem Bremsdruck und Druckentlastung sozusagen stotternd gearbeitet zu werden braucht ; die Erfindung ermöglicht auch das langsame Heranfahren an genau das Druckniveau, welches bei optimaler Bremswirkung gerade eben noch kein Radblockieren hervorruft.

Es empfiehlt sich, den erfindungsgemäßen Druckmodulator möglichst nahe an den Radbremszylindern anzuordnen, so daß zur wirkungsvollen Druckmodulation nur geringe Volumenänderungen erforderlich sind ; daher ist auch die jeweils erforderliche Energiemenge nur sehr gering, denn sowohl Kolbendurchmesser als auch Hub des Kolbens können kleingehalten werden, so daß auch Aufbau und Umfang des gesamten Druckmodulators eine nur geringe Baugröße erforderlich macht, da der Hub des Linearaktuators, multipliziert mit der Führungskolbenfläche 12a der Volumenänderung in der jeweiligen Bremsleitung entspricht.

Da, wie dargestellt, die Spulenwicklung 13 sich in einem gut wärmeleitenden Kontakt mit dem äußeren Gehäuse befindet, ergeben sich hier auch keine thermischen Probleme ; ferner ist die Einrichtung insoweit fehlersicher, denn bei Ausfall der elektrischen Versorgung bleibt das Normalbremsverhalten unverändert erhalten.

Lediglich für den praktischen nicht zu erwartenden Fall, daß die Spule 13 ständig erregt ist, kann es wünschenswert sein, das Leckvermögen im Bereich des Führungskolbens 12a so auszubilden, daß nach relativ kurzer Zeit, beispielsweise einige Sekunden, so viel Bremsfluid in und durch den Bereich des Druckmodulators geflossen ist, daß die Bremsen in üblicher Weise arbeiten können. Diese Möglichkeit kann problemlos durch entsprechende Auslegung der Komponenten umfaßt werden, wodurch auch der Bedarf zusätzlicher redundanter Fehlerschaltungen gering bleibt. Da ABS-Funktionen üblicherweise mit mehreren Zyklen pro Sekunde arbeiten, werden diese durch das soeben erwähnte gesteuerte Leckvermögen, welches im 1 Hz-Bereich liegt, nicht beeinflußt.

Die in Fig. 1 gezeigte Ausführungsform des erfindungsgemäßen Druckmodulators ermöglicht ergänzend die aus der Umkehrung des ABS-Funktionsprinzips mögliche Realisierung sogenannter ASR-Funktionen (Antischlupfregelung), indem in Richtung auf den Radbremszylinder durch entsprechende Auslegung und Betätigung des linearen Aktuators Druck ausgeübt und entsprechend moduliert wird.

Im unteren Teil des Kolbens 12, der mit seinem mittleren Teil den linearen Aktuator bildet und dort auch als Ankerkolben bezeichnet werden kann, ist das Rückschlagventil als ein Doppelrückschlagventil 25 ausgebildet, welches beidseitig, also zum Hauptbremszylinder (in der Zeichenebene nach oben) und zum Radbremszylinder (in der Zeichenebene nach unten) abschließen kann und aus einem Ventilglied 26 besteht. Das Ventilglied ist gleitverschieblich in einer erweiterten Gleitführungsbohrung 27 im unteren Führungskolben 12b gelagert und durch beidseitig an einer Abschulterung jeweils angreifende Vorspannungsfedern 28a, 28b in einer Mittelstellung und damit nach beiden Seiten offen gehalten. Das Ventilglied 26 bildet mit einem entsprechend geformten Endbereich 26a und einem konischen Sitz 27a zum Kolbenlängskanal 20 einen ersten Verschlußsitz bei 30 und mit seinem unteren Endbereich 26b und einem von einem Einsatzstück 31 im unteren Führungskolben 12b gebildeten Sitz 31a einen zweiten Verschlußsitz 29. Ferner umfaßt das Ventilglied 26 Drossellängsbohrungen 32, die die beidseitigen Ventildruckräume miteinander verbinden.

Zur ergänzenden Realisierung auch von ASR-Funtkionen ergibt sich dann die folgende Wirkungsweise. Der Anker (kolben) 12 (Linearaktuator) wird elektromagnetisch durch entsprechende Beaufschlagung der Wicklung 13' in der Zeichenebene nach unten, also in Richtung auf den jeweils angeschlossenen Radbremszylinder bewegt, wobei in diesem Fall weiter nach unten gezogene(n) Steuerkante(n) 33 der Bypaß-Durchlaßschlitze 23b im unteren Führungskolben 12b und das Doppelrückschlagventil das Volumen zum Radbremszylinder abschließen. Hierdurch kann sich ein entsprechender Druck aufbauen — das Ventilglied 26 des Doppelrückschlagventils 25 liegt in diesem Fall (ASR-Funktion) am oberen Sitz 27a an. Je nach dem Vorzeichen der über dem Doppelrückschlagventil 25 liegenden Druckdifferenz $\Delta P$ wird durch die Drosselwirkung der Längskanäle 32 die Anlage an den Sitzen 27a oben bzw. 31a unten erfolgen, wobei bei ABS-Funktionen das Ventilglied am unteren Verschlußsitz 29 anliegt.

Die Ausführungsform eignet sich ferner noch für ein ergänzendes Anwendungsgebiet, welches darin besteht, daß auch bei Normalbremsungen ein solcher Druckmodulator, beispielsweise in Abhängigkeit von geeigneten Sensorsignalen, mit Vorteil für die Erzielung bestimmter Bremsdruckverteilungen und -wirkungen eingesetzt werden kann. So können solchen Druckmodulatoren in den Bremsleitungen oder unmittelbar an den Bremssätteln beispielsweise Sensorsignale über Einfederungen infolge von Beladungszuständen (dynamische Betriebskenngrößen) oder auch über entsprechende Achsbelastungen, insbesondere im Hinterachsbereich (statische Betriebskenngrößen) vermittelt werden, so daß sich im Betrieb dann jeweils entsprechende Ansteuerungen der Druckmodulatoren zur Bremskraftverteilung in Richtung auf eine optimale Verteilung vornehmen lassen. Hierdurch ist es möglich, adaptiv und gezielt eine Druckabsenkung auch im Normalbetrieb unter Verwendung des ABS-Modulators vorzunehmen oder bei kritischen Zuständen die Bremsauslegung des —Fahrzeugs, eventuell auch durch Alterung der Bremsanlage bedingt, zu korrigieren.

In einer bevorzugten Ausgestaltung vorliegender Erfindung bietet sich ein derart ausgebildeter Druckmodulator zum kostensparenden und wirkungsvollen Einbau direkt im Bereich der Bremszange 37 einer Scheibenbremse 38 an, wobei die Bremsscheibe mit 39 bezeichnet ist, siehe Fig. 2. Auf diese Weise ergibt sich ein minimales, unter Druck zu steuerndes Druckmittelvolumen für die jeweilige Bremse, so daß zur Erzielung auch umfassender Druckänderungen nur vergleichsweise sehr geringe Volumenänderungen (beispielsweise von lediglich 1 cm³ oder weniger, so daß sowohl der Kolbenbereich (wirksame Kolbenfläche) als auch die zur Modulation erforderlichen elektrischen Kräfte minimal sein können.

Bei dem Ausführungsbeispiel der Fig. 2 ist der Linearaktuator, bestehend aus zentralem Ankerkolben 12 und dem beidseitigen Führungskolben 12a, 12b vorzugsweise quer in einem oberen, eine entsprechende Gehäuseausnehmung bildenden Teil oder einen Ansatz der Bremszange 37 der Scheibenbremse 38 eingebaut, wobei innere Kanäle 40 mit Verzweigung bei 41 und sich daran anschließende Teilkanäle 42a, 42b das Druckmittel auf ·die beidseitigen Bremskissen 43a, 43b aufleiten. Hierdurch, nämlich durch die Anordnung des Modulators so nahe wie möglich bzw. unmittelbar in der Bremszange reduziert sich erkennbar das zu modulierende Druckmittelvolumen ΔV und damit die zur Modulation erforderliche Energie.

**Patentansprüche**

1. Druckmodulator für ABS-Systeme (automatische Blockierschutz-Systeme) bei Kraftfahrzeug-Bremsanlagen, der unmittelbar in die hydraulische oder pneumatische Druckleitung zwischen einen Hauptbremszylinder und wenigstens einen Radbremszylinder, geschaltet ist mit einem zwei Anschlüsse aufweisenden Gehäuse (11), mit einem zwischen den Anschlüssen befindlichen Zylinder, mit einem in Längsrichtung beidseitig von Bremsfluid beaufschlagbaren und im ABS-Betrieb im Zylinder verschiebbaren Kolben (12), mit einer im ABS-Betrieb geschlossenen Ventilanordnung (25) und mit einem ausschließlich durch eine elektrische Hilfsenergie betätigbaren linearen Aktuator (13', 14), der mittels einer Erregerwicklung (13') und eines auf den Kolben (12) wirkenden Ankers (14) zur elektromagnetischen Verschiebung des Kolbens (12) dient, um im ABS-Betrieb dem Hauptbremszylinderdruck entgegenzuarbeiten bei gleichzeitiger Druckentlastung des Radbremszylinders unter Bildung beliebiger Druckzeitverlaufsfunktionen am Radbremszylinder, dadurch gekennzeichnet, daß zur ergänzenden Realisierung von ASR-Betrieb (Antriebsschlupfregelungsbetrieb) die elektrische Erregerwicklung (13') entsprechend gerichtet beaufschlagbar ist, und daß die Ventilanordnung (25) als Doppelrückschlagventil mit beidseitig (zum Hauptbremszylinder bzw. zum Radbremszylinder) gerichteter Verschlußwirkung ausgebildet ist.

2. Druckmodulator nach Anspruch 1, dadurch gekennzeichnet, daß der auf dem Kolben (12) gelagerte Anker (14) von einem hochwirksamen Permanent-Ringmagneten (14) oder über seinen Umfang vorzugsweise gleichförmig verteilten Magnetsegmenten gebildet ist.

3. Druckmodulator nach Anspruch 1, dadurch gekennzeichnet, daß des Doppelrückschlagventil (25) ein durch beidseitige Vorspannfedern (28a, 28b) in einer nach beiden Seiten offenen Mittelstellung gehaltenes Ventilglied (26) umfaßt, welches je nach Vorzeichen des einwirkenden Differenzdrucks in Richtung auf den Hauptbremszylinder oder den jeweiligen Radbremszylinder schließt, und daß das Doppelrückschlagventil (25) sich an eine Parallelleitung (20) anschließt, die den verschieblichen Kolben (12) durchsetzt.

4. Druckmodulator nach Anspruch 3, dadurch gekennzeichnet, daß das Ventilglied (26) des Doppelrückschlagventils (25) Drossellängskanäle (32) aufweist.

5. Druckmodulator nach einem der Ansprüche 1 bis 4, dadurch gekennzeichnet, daß der Kolben (12) beidseitig seine Lagerung und Gleitführung bewirkende Führungskolben (12a, 12b) mit kleinerem und gegebenenfalls unterschiedlichem Durchmesser aufweist, die in entsprechend zugeordneten, zylindrischen Führungsflächen eines inneren oder äußeren Gehäuseteils (11a, 11b) gleiten.

6. Druckmodulator nach Anspruch 5, dadurch gekennzeichnet, daß in den von den Gehäuseteilen gebildeten zylindrischen Gleitführungsflächen für die beidseitigen Führungskolben (12a, 12b) Bypaß-Längsschlitze (23) bis zu einer jeweils vorgegebenen Höhe angeordnet sind zur Bremsentlüftung mit der Maßgabe einer hinreichenden Toleranz zwischen der mittleren Bohrung (24) des inneren Gehäuseteils (11b) und dem zentralen Kolbenteil (Linearaktuator) bzw. dem von diesem nach außen gelagerten Ringmagneten (14) oder den Magnetsegmenten, und daß die Steuerkanten (33) von weiteren Bypaß-Längsschlitzen (23b) im unteren Führungskolben (12b) so bemessen sind, daß diese Bypaß-Längsschlitze bei Einsetzen von ASR-Funktionen schließen, mit der Maßgabe, daß die Bypaß-Längsschlitze (23a) im oberen, vom Druck des Hauptbremszylinders beaufschlagten Führungskolben bei abwärts gerichteter Bewegung des Kolbens (12) insgesamt nicht vor Verschluß durch die unteren Steuerkanten öffnen.

7. Druckmodulator nach einem der Ansprüche 1 bis 6, dadurch gekennzeichnet, daß er unmittelbar im Bremssattel oder in der Bremszange als integriertes Bauteil eingebaut ist.

8. Druckmodulator nach Anspruch 7, dadurch gekennzeichnet, daß die Bremszange mit einem einstückigen Ansatz eine den Kolben (12) mit seinen beidseitigen Führungskolben (12a, 12b) aufnehmende Gehäuseausnehmung bildet, in deren Bereich auch die elektrische Erregerwicklung (13′) für den Kolben (12) angeordnet ist.

9. Druckmodulator nach Anspruch 7 oder 8, dadurch gekennzeichnet, daß der Kolben (12) mit seinen beidseitigen Führungskolben (12a, 12b) in der vom Ansatz der Bremszange gebildeten Gehäuseausnehmung in Querrichtung verschieblich gelagert ist und über innere Kanäle mit zwei Kanälen (40, 41, 42a, 42b) mit den jeweiligen Bremskolben in Wirkverbindung steht.

## Claims

1. Pressure modulator for anti-lock systems in motor vehicle brake systems, which is connected directly into the hydraulic or pneumatic pressure line between a main brake cylinder and at least one wheel brake cylinder, with a housing (11), having two connections, with a cylinder, located between the connections, with a piston (12), which can be actuated in longitudinal direction on both sides by brake fluid and can be displaced in the cylinder in anti-lock operation, with a valve arrangement (25), closed in anti-lock operation, and with a linear actuator (13′, 14), which can be operated exclusively by an auxiliary electric energy and serves, by means of an exciter winding (13′) and an armature (14) acting on the piston (12), for the electromagnetic displacement of the piston (12) in order to work against the main brake cylinder pressure in anti-lock operation with simultaneous pressure relief of the wheel brake cylinder and formation of any desired pressure time characteristic functions at the wheel brake cylinder, characterized in that, for the additional realization of drive slip control, the electric exciter winding (13′) can be actuated in a corresponding direction, and in that the valve arrangement (25) is designed as double check valve with closure effect directed to both sides (to the main brake cylinder and to the wheel brake cylinder).

2. Pressure modulator according to Claim 1, characterized in that the armature (14), mounted on the piston (12), is formed by a highly effective permanent annular magnet (14) or magnet segments preferably evenly distributed over its circumference.

3. Pressure modulator according to Claim 1, characterized in that the double check valve (25) comprises a valve element (26), which is held in a middle position open to both sides by pretension springs (28a, 28b) on both sides and, depending on the sign of the differential pressure acting, closes in the direction of the main brake cylinder or of the respective wheel brake cylinder, and in that the double check valve (25) adjoins a parallel line (20), which passes through the displaceable piston (12).

4. Pressure modulator according to Claim 3, characterized in that the valve element (26) of the double check valve (25) has throttling longitudinal channels (32).

5. Pressure modulator according to one of Claims 1 to 4, characterized in that the piston (12) has on both sides guide pistons (12a, 12b) of smaller and, if appropriate, different diameter, which provide its mounting and sliding guidance and slide in correspondingly assigned, cylindrical guide surfaces of an inner or outer housing part (11a, 11b).

6. Pressure modulator according to Claim 5, characterized in that, in the cylindrical sliding guide surfaces formed by the housing parts for the guide pistons (12a, 12b) on both sides, there are arranged bypass longitudinal slits (23), up to a given height in each case, for brake bleeding, on condition of an adequate tolerance between the middle bore (24) of the inner housing part (11b) and the central piston part (linear actuator) or the annular magnet (14), shifted outwards by the latter, or the magnet segments, and in that the control edges (33) of further bypass longitudinal slits (23b) in the lower guide piston (12b) are dimensioned in such a way that these bypass longitudinal slits close when drive slip control functions commence, on condition that the bypass longitudinal slits (23a) in the upper guide piston, actuated by the pressure of the main brake cylinder, altogether do not open upon downwardly directed movement of the piston (12) before closure by the lower control edges.

7. Pressure modulator according to one of Claims 1 to 6, characterized in that it is installed directly in the caliper as an integrated component.

8. Pressure modulator according to Claim 7, characterized in that the caliper forms with an integral extension a housing recess, which receives the piston (12) with its guide pistons (12a, 12b) on both sides and in the area of which the electric exciter winding (13′) for the piston (12) is also arranged.

9. Pressure modulator according to Claim 7 or 8, characterized in that the piston (12) is mounted displaceably in transverse direction with its guide pistons (12a, 12b) on both sides in the housing recess formed by the extension of the caliper and is in effective connection via inner channels with two channels (40, 41, 42a, 42b) with the respective brake piston.

## Revendications

1. Modulateur de pression pour systèmes ABS (systèmes automatiques antiblocage) dans les unités de freinage de véhicules automobiles, qui est branché directement dans la conduite de pression hydraulique ou pneumatique, entre un maître-cylindre et au moins un cylindre de frein de roue, avec un boîtier (11) présentant deux connexions, avec un cylindre placé entre les connexions, avec un piston (12) pouvant coulisser dans le cylindre dans le sens de la longueur, soumis à la pression du liquide de freinage de chaque côté et en fonctionnement ABS, avec un dispositif de soupape (25) fermé en fonctionnement ABS, et avec un actuateur linéaire (13', 14) pouvant être excité exclusivement par une énergie auxiliaire électrique, au moyen d'un bobinage d'excitation (13') et d'un coulisseau (14) en prise sur le piston (14), qui sert à déplacer électromagnétiquement le piston (12), pour s'opposer en fonctionnement ABS à la pression du maître-cylindre tout en diminuant la pression dans le cylindre de frein de roue, en réalisant toute fonction pression-temps dans le cylindre de frein de roue, caractérisé en ce que pour compléter le fonctionnement ASR (fonctionnement antipatinage), la bobine d'excitation électrique (13') est conçue de manière appropriée pour être soumise à une tension et que le dispositif de soupape (25) est exécuté en clapet double de non-retour, avec possibilité de fermeture commandée de chaque côté (du côté du maître-cylindre et du côté du cylindre de frein de roue).

2. Modulateur de pression selon la revendication 1, caractérisé en ce que sur le piston (12) est logé un induit (14) en aimant permanent annulaire très efficace, ou des segments d'aimant sont disposés de manière régulière, de préférence, à sa périphérie.

3. Modulateur de pression selon la revendication 1, caractérisé en ce que le clapet double anti-retour (25) comprend un membre de soupape (26) maintenu en position médiane ouverte des deux côtés, grâce à un ressort en contrainte de chaque côté (28a, 28b), selon le signe de la différence de pression qui s'exerce, il se ferme du côté du maître-cylindre ou du côté de chacun des cylindres de frein de roue, et que le clapet double de non retour (25) se raccorde à une conduite parallèle (20) qui traverse le piston coulissant (12).

4. Modulateur de pression selon la revendication 3, caractérisé en ce que le membre de soupape (26) du clapet double de non retour (25) présente des canaux longitudinaux d'écoulement (32).

5. Modulateur de pression selon l'une des revendications 1 à 4, caractérisé en ce que le piston (12) présente de chaque côté des pistons de guidage (12a, 12b) qui assurent son logement et son guidage en coulissement, avec un diamètre plus petit et le cas échéant différent, qui glissent dans des surfaces de guidage appropriées et cylindriques d'une partie interne de boîtier et d'une partie externe de boîtier (11a, 11b).

6. Modulateur de pression selon la revendication 5, caractérisé en ce que, dans les surfaces de glissement cylindriques formées par les pièces de boîtier pour les deux pistons de guidage (12a, 12b) sont disposées des fentes longitudinales bypass (23), jusqu'à une hauteur déterminée dans chaque cas, pour purger le frein, avec la condition qu'il y a une tolérance suffisante entre l'alésage médian (24) de la partie interne de boîtier (11b) et la partie centrale du piston (actuateur linéaire) ou bien les aimants annulaires (14) ou les segments d'aimants disposés à la périphérie du piston, et que les bords de commande (33) d'autres fentes longitudinales bypass (23b) sont dimensionnées dans le piston inférieur de guidage (12b) de telle sorte que ces fentes longitudinales bypass sont obturées lors du fonctionnement de l'ASR, avec la condition que les fentes longitudinales bypass (23) du piston de guidage supérieur soumis à la pression du maître-cylindre lors du mouvement vers le bas du piston (12) ne débouchent pas avant l'obturation des bords de commande inférieurs.

7. Modulateur de pression selon l'une des revendications 1 à 6, caractérisé en ce qu'il est monté directement dans l'étrier de frein ou dans la mâchoire de frein en tant que pièce constitutive intégrée.

8. Modulateur de pression selon la revendication 7, caractérisé en ce que la mâchoire de frein forme une seule pièce avec un évidement de boîtier recevant le piston (12) avec ses pistons de guidage (12a, 12b) de chaque côté, dans son volume est disposée aussi la bobine à excitation électrique (13') pour manœuvrer le piston (12).

9. Modulateur de pression selon la revendication 7 ou 8, caractérisé en ce que le piston (12) avec ses pistons de guidage de chaque côté (12a, 12b) est logé en coulissement en sens transversal dans l'évidement de boîtier formé dans le bloc de la mâchoire de frein et est en relation efficace avec chaque piston de frein par l'intermédiaire de canaux internes avec deux canaux de dérivation (40, 41, 42a, 42b).

# Fig.1

# Fig.2